# EUROPÄISCHE PATENTSCHRIFT

(11) **EP 2 564 694 B1**
(45) Veröffentlichungstag und Bekanntmachung des Hinweises auf die Patenterteilung: **09.09.2015**
(21) Anmeldenummer: 12177653.8
(22) Anmeldetag: 24.07.2012
(51) Int. Cl.: A01K 5/00

(54) **Fördervorrichtung**
Conveying device
Dispositif d'acheminement

(30) Priorität: 01.09.2011 DE 202011105225 U
(43) Veröffentlichungstag der Anmeldung: 06.03.2013
(73) Patentinhaber: Trioliet Holding B.V., 7575 BE Oldenzaal (NL)
(72) Erfinder: Liet, Cornelis Hendricus, 7581 PJ Losser (NL)
(74) Vertreter: Grünecker Patent- und Rechtsanwälte PartG mbB

(56) Entgegenhaltungen:
- EP-A1- 0 738 464
- DE-U1-202008 006 184
- US-A- 4 003 502
- US-A- 5 615 839

## Beschreibung

Die Erfindung bezieht sich auf eine Fördervorrichtung, die sich insbesondere für eine Futter-Mischeinrichtung eignet, der im Oberbegriff von Anspruch 1 erläuterten Art.

Eine derartige Fördervorrichtung ist aus der EP 738 464 bekannt. Die bekannte Fördervorrichtung ist zum Handhaben von Futter ausgebildet und enthält einen Behälter, in dem sich ein um eine im Wesentlichen senkrechte Drehachse rotierend angetriebene Lockerungs- und Mischschnecke befindet. Unterhalb der Mischschnecke ist eine um die gleiche Drehachse rotierend angetriebene Scheibe vorgesehen, die in Umfangsrichtung unter der Schnecke vorsteht und einen Großteil des Bodens des Behälters überdeckt. Die Scheibe ist als Schleuderscheibe ausgebildet, die das im Behälter gehandhabte Futter aus einer Austragsöffnung fördert, sobald der dort vorhandene Schieber geöffnet wurde.

Fördervorrichtungen mit Unterstützungsmitteln zum Optimieren der Förderung insbesondere von Futter sind auch in den verschiedensten anderen konstruktiven Ausprägungen bekannt. So zeigt beispielsweise die US 5 456 416 einen Futtermischer mit Behälter und einer um eine im Wesentlichen senkrechte Achse drehbar angetriebenen Mischschnecke, bei dem der von der Mischschnecke überstrichene Drehkreis auf dem Boden merklich kleiner ist als der Boden selbst. Der Abstand zwischen der Mischschnecke und dem Umfang des Bodens wird von einem plattenförmigen Ausleger überbrückt, der sich nur über einen kleinen Winkelbereich um die Drehachse erstreckt und mit der Schnecke umläuft. Auf diese Weise soll Raum geschaffen werden zum Aufnehmen und Umwälzen des Futters, was beispielsweise die Mischleistung verbessert. Auf dem Ausleger ist ein Mitnehmer vorgesehen, der so angeordnet ist, dass das Futter in Richtung auf die Drehachse geleitet wird.

Eine ähnliche Konstruktion eines Auslegers für eine Mischschnecke zeigt die US 7 507 016.

Aus der US 2007/0274151 ist ein Futtermischer bekannt, bei dem unterhalb mindestens einer der Mischschnecken ein wenigstens ein um die Drehachse der Mischschnecke rotierender Mitnehmerarm vorgesehen ist, der den Boden des Mischbehälters überstreicht und Futter aus der Ausgabeöffnung hinausdrückt, sobald Futter ausgegeben werden soll. Ist die Ausgabetür geschlossen, so schiebt der Mitnehmer das Futter lediglich über den Boden des Behälters um die Drehachse herum.

Weiteren Stand der Technik zeigen US 5 615 839 A, US 4 003 502 A, DE 20 2008 006 184 U1.

Der Erfindung liegt die Aufgabe zugrunde, eine Fördervorrichtung bereitzustellen, mit der die Förderung optimiert werden kann.

Die Aufgabe wird durch die im Anspruch 1 angegebenen Merkmale gelöst.

Erfindungsgemäß wurde festgestellt, dass eine rotierende Auffangfläche auch die Förderleistung innerhalb des Behälters verbessern kann, wenn man diese mit einem Abstreifer kombiniert, die die Auffangfläche vom Umfang in Richtung auf die Drehachse übergreift. Auf diese Weise wird ein von oben auf die Auffangfläche aufgebrachtes Futter in eine gewünschte Richtung ausgelenkt, wobei die Richtung und Intensität der Auslenkung über Konstruktion und Anordnung des Abstreifers auf einfache und kostengünstige Weise steuerbar ist. Darüber hinaus wird durch den Abstreifer auch verhindert, dass das Fördergut an der Wandung des Behälters verbleibt, wozu insbesondere in einem Mischbehälter mit Mischschnecke behandeltes Futter neigt

Die Steuerung kann beispielsweise durch eine Schrägstellung des Abstreifers bzw. seiner Leitfläche bezüglich der Radialen zur Drehachse erfolgen.

Je nach Lage des in Drehrichtung vorlaufenden Endes der Leitfläche kann das zu fördernde Gut, insbesondere das Futter, nach außen oder nach innen geleitet werden.

Es ist weiterhin möglich, den Abstreifer einstellbar auszubilden, so dass er je nach gewünschter Förderaufgabe eine andere Stellung einnehmen kann.

Auch ist es bevorzugt, den Abstreifer in eine unwirksame Stellung zu bewegen, z.B. durch Verschwenken, so dass die Fördereinrichtung auch ohne Abstreifer zu verwenden ist, falls dies durch die Art des Fördergutes oder durch die Art der Förderaufgabe geboten erscheint.

Der Abstreifer kann weiterhin mit einer Schneideinrichtung zum Zerschneiden oder Auflockern des Fördergutes versehen sein, die bevorzugt als Messerkante und bevorzugt federbelastet ist.

Der Abstreifer kann weiterhin mit einer Extra-Leiteinrichtung versehen sein, die das Fördergut dem Abstreifer zuführt oder den Abstreifer in seiner Funktion unterstützt.

In einem bevorzugten Ausführungsbeispiel ist die Auffangfläche auf einer geschlossenen Scheibe ausgebildet.

Die Förderarbeit wird verbessert, wenn sich oberhalb der Auffangfläche Mitnehmer befinden. Die Mitnehmer können als Leitstege direkt auf der Auffangfläche ausgebildet sein oder es kann eine zusätzliche Scheibe vorgesehen sein, an deren Umfang Mitnehmer in Form von Auslegern vorgesehen sind, die rotierend antreibbar ist.

Es ist jedoch weiterhin möglich, die Auffangfläche auf einer Vielzahl von Auslegern auszubilden.

Dabei weisen die Ausleger eine in Draufsicht im Wesentlichen sägezahnähnliche oder dreieckige Form auf, deren in Drehrichtung vorlaufende Kante als Mitnehmer ausgebildet ist.

Die Erfindung ist besonders vorteilhaft in einer Futtermischeinrichtung zu verwenden, die wenigstens eine Mischschnecke aufweist. Dabei wird die Auffangfläche so angeordnet, dass sie unterhalb der Mischschnecke radial vorsteht und um die Drehachse der Mischschnecke drehbar ist.

Der Abstreifer erstreckt sich dabei bevorzugt bis zu einem auf die Auffangfläche projizierten Drehkreis der Mischschnecke oder reicht unterhalb der Mischschnecke bis zur Drehachse.

Bei einer Futtermischeinrichtung mit mehreren Mischschnecken ist es je nach Förderaufgabe ausreichend, wenn nur ein Teil der Mischschnecke mit der erfindungsgemäßen Auffangfläche mit Abstreifer versehen ist.

Ein weiteres Anwendungsgebiet der erfindungsgemäßen Fördervorrichtung ist die Anwendung als einfacher Förder-Rotor, d.h. unabhängig von einer Mischschnecke.

Die Erfindung ist besonders vorteilhaft für (selbstfahrende) Mischwagen einsetzbar, um das Fördergut aufzunehmen und in den Mischbehälter hinein zu transportieren.

Ausführungsbeispiele der Erfindung werden nachfolgend anhand der Zeichnungen näher erläutert. Es zeigen:
- Fig. 1A - 1C: ein erstes Ausführungsbeispiel einer erfindungsgemäßen Fördereinrichtung,
- Fig. 2A - 2C: ein zweites Ausführungsbeispiel einer erfindungsgemäßen Fördereinrichtung,
- Fig. 2D - 2F: eine Abwandlung des zweiten Ausführungsbeispiels,
- Fig. 3A - 3D: ein drittes Ausführungsbeispiel einer erfindungsgemäßen Fördereinrichtung,
- Fig. 4A - 4D: ein viertes Ausführungsbeispiel einer erfindungsgemäßen Fördereinrichtung,
- Fig. 5A - 5C: ein fünftes Ausführungsbeispiel einer erfindungsgemäßen Fördereinrichtung,
- Fig. 6A - 6C: ein sechstes Ausführungsbeispiel einer erfindungsgemäßen Fördereinrichtung,
- Fig. 7A - 7C: ein erstes Anwendungsbeispiel einer erfindungsgemäßen Fördereinrichtung,
- Fig. 8A - 8C: ein zweites Anwendungsbeispiel einer erfindungsgemäßen Fördereinrichtung,
- Fig. 9A - 9D: ein drittes Anwendungsbeispiel einer erfindungsgemäßen Fördereinrichtung,
- Fig. 10A - 10C: ein viertes Anwendungsbeispiel einer erfindungsgemäßen Fördereinrichtung,
- Fig. 11A - 11B: ein fünftes Anwendungsbeispiel einer erfindungsgemäßen Fördereinrichtung,
- Fig. 12A - 12B: ein sechstes Anwendungsbeispiel einer erfindungsgemäßen Fördereinrichtung,
- Fig. 13A - 13C: ein siebentes Anwendungsbeispiel einer erfindungsgemäßen Fördereinrichtung, und
- Fig. 14A - 14C: ein achtes Anwendungsbeispiel einer erfindungsgemäßen Fördereinrichtung.

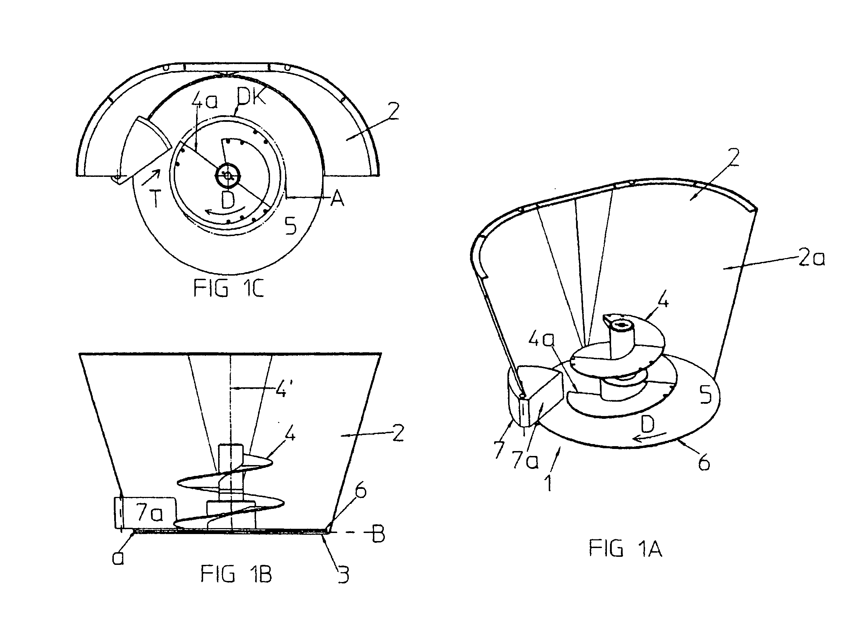

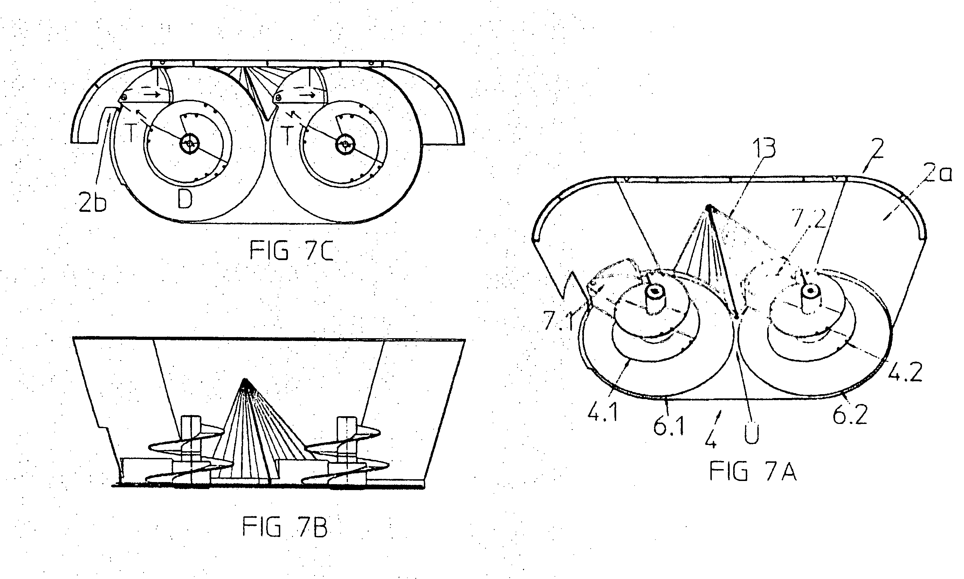

Die Fig. 1A bis 1C zeigen ein erstes Ausführungsbeispiel einer erfindungsgemäßen Fördereinrichtung 1, eingebaut in eine Futtermischeinrichtung in Form eines Futtermischwagens oder Futtermischbehälters, der einen Behälter 2 mit einer Wandung 2a aufweist, die die übliche sich nach oben trichterartig erweiternde, meist langovale Form hat. In der Wandung 2a ist eine hier nicht ersichtliche Austragsöffnung 2b vorgesehen (vergleiche z. B. Fig 7). Ein Boden 3 definiert eine Bodenebene B und ist im Wesentlichen kreisförmig. Senkrecht auf der Bodenebene B erstreckt sich eine Drehachse 4' einer Mischschnecke 4, die die übliche Konstruktion aufweist. Im dargestellten Ausführungsbeispiel hat die Mischschnecke eine einzige Wendel mit einer in Drehrichtung D vorlaufenden Kante 4a, die in der Nähe des Bodens angeordnet ist. Die Drehrichtung D der Mischschnecke 4 ist derart gewählt, dass die vorlaufende Kante 4a Mischgut vom Boden aufnimmt und nach oben transportiert, von wo es wieder nach unten in Richtung auf den Boden fällt.

Die Schnecke 4 verjüngt sich nach oben, wobei der größte projizierbare Drehkreis DK durch die vorlaufende Kante 4a gebildet wird. Der Durchmesser des Drehkreises DK ist kleiner als der Durchmesser des Bodens 3, so dass zwischen dem radial äußeren Ende der vorlaufenden Kante 4a und der Wandung 2a ein Abstand A besteht. Durch den Abstand A wird eine Auffangfläche 5 definiert, auf der das Fördergut für eine Mitnahme in Drehrichtung D zu liegen kommt, das durch die obere Öffnung des Behälters eingebracht oder von der Mischschnecke 4 nach oben transportiert und vom oberen, nachlaufenden Ende der Mischschnecke 4 herabfällt. Die Auffangfläche 5 ist eben und in diesem Ausführungsbeispiel ohne Aufbauten, im Wesentlichen horizontal und dreht sich bevorzugt mit gleicher Geschwindigkeit und gleicher Drehrichtung D um die Drehachse 4' der Mischschnecke 4 mit. Dies kann beispielsweise dadurch erreicht werden, dass die Auffangfläche 5 fest mit der Mischschnecke 4 verbunden ist.

Es kann jedoch auch dadurch erreicht werden, dass die Auffangfläche 5 auf einer gesonderten, geschlossenen Kreisscheibe 6 angeordnet ist, die entweder über einen eigenen Antrieb oder vom Antrieb der Mischschnecke 4 um die Drehachse 4' rotierend angetrieben wird. Die Auffangfläche 5 verläuft im Wesentlichen parallel zur Bodenebene B, wobei die Bodenebene B entweder durch den Boden 3 oder durch die Scheibe 6 selbst definiert ist. Bevorzugt ist die vorlaufende Kante 4a der Mischschnecke 4 durch eine Schweißnaht mit der Auffangfläche 5 verschweißt, so dass an dieser Stelle kein Spalt entsteht, in dem sich Fördergut ansammeln kann.

In den Weg des Fördergutes auf der Auffangfläche 5 ragt ein bezüglich der Drehung D während des Mischens ortsfester Abstreifer 7 und bildet ein Hindernis für das auf der Auffangfläche 5 in Drehrichtung D transportierte Fördergut. Der Abstreifer 7 ist mit einer in diesem Ausführungsbeispiel ebenen Leitfläche 7a versehen, die bevorzugt im Wesentlichen senkrecht auf der Auffangfläche 5 steht und entgegen der Drehrichtung D weist. Die Leitfläche 7a kann jedoch auch unter einem Winkel zur Senkrechten angeordnet sein. Der Abstreifer 7 und insbesondere seine Leitfläche 7a ist schräg zur Radialen bezüglich der Drehachse 4' angeordnet, wobei die Richtung dieser Schräglage und ihr Ausmaß durch die gewünschten Fördereigenschaften bestimmt wird. Im dargestellten Ausführungsbeispiel verläuft die Leitfläche 7a mit ihrem radial innenliegenden Ende vorlaufend zur Drehrichtung D, so dass das auf der Auffangfläche 5 transportierte Fördergut in Richtung nach innen, d.h. in Richtung auf die Förderschnecke 4 transportiert wird, wie dies durch den Pfeil T angedeutet ist. Zum Verändern der Schräglage des Abstreifers 7 bzw. seiner Leitfläche 7a bezüglich der Radialen und zum Einstellen der durch den Abstreifer 7 bewirkten Transportrichtung T kann der Abstreifer 7 verstellbar sein. Das Verstellen wird beispielsweise durch ein Verschwenken oder Verschieben oder Versetzen des Abstreifers 7 bewirkt. Weiterhin ist der Abstreifer 7 bevorzugt unwirksam zu machen, entweder durch Verstellen in eine unwirksame Stellung oder durch ein Entfernen des Abstreifers aus dem Behälter 2. Es sind Vorkehrungen getroffen, den Abstreifer 7 in seinen verschiedenen Positionen, insbesondere zum Mischen, arretieren zu können.

Der Abstreifer 7 weist einen Abstreifabstand a (Fig. 1B) zur Auflagefläche 5 auf, der gerade ausreicht, die Auflagefläche 5 im Wesentlichen reibungsfrei durchlaufen zu lassen. Auf jeden Fall sollte der Abstreifabstand a so bemessen werden, dass kein Fördergut zwischen Abstreifer 7 und Auffangfläche 5 gerät und dort zu Verstopfungen führt oder eine Bremswirkung entfaltet. Die Höhe der Leitfläche 7a in Richtung der Drehachse 4' beträgt bevorzugt etwa einen vertikalen Abstand zwischen zwei Umdrehungen der Wendel der Mischschnecke 4.

Durch die erfindungsgemäße Fördereinrichtung 1 wird das von der Schnecke 4 nach oben transportierte und an der Wandung des Behälters 2 wieder abwärts geführte Fördergut auf die Auffangfläche 5 abgelagert und anschließend durch den Abstreifer 7 dem unteren Bereich der Förderschnecke 4 wieder zugeführt. Dadurch wird einerseits ein größeres nutzbares Aufnahmevolumen des Behälters 2 durch Verkleinerung der Schnecke 4 erreicht, was wiederum den Energieverbrauch der Fördereinrichtung bzw. der Mischeinrichtung reduziert. Trotzdem wird sichergestellt, dass das gesamte Fördergut bewegt wird.

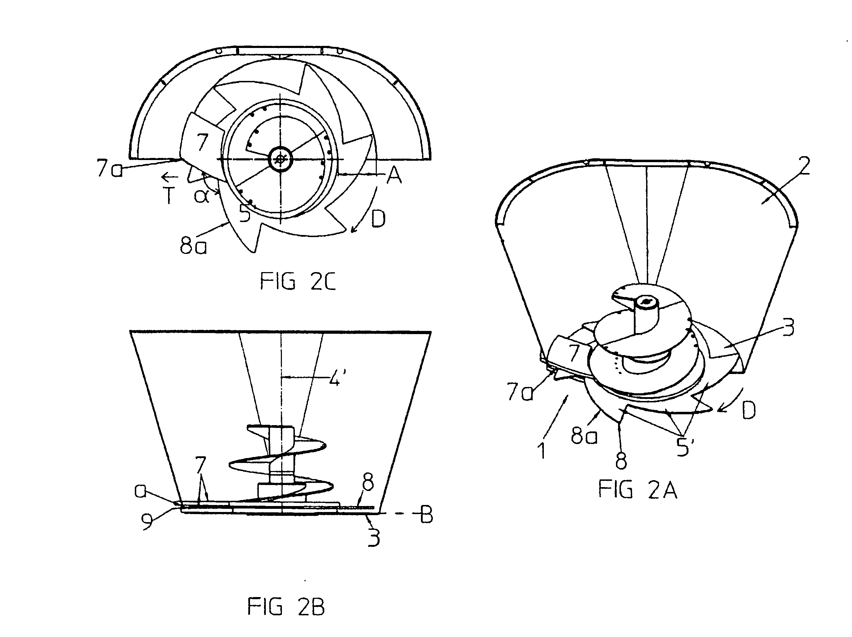

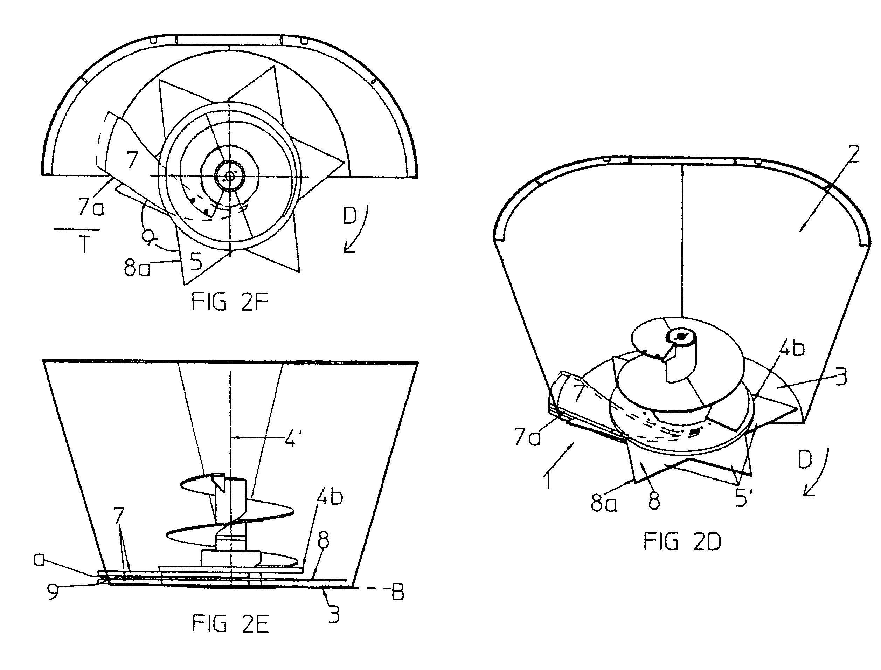

In den Fig. 2A bis 2C wird ein weiteres Ausführungsbeispiel einer erfindungsgemäßen Fördereinrichtung 1 dargestellt, wobei gleiche bzw. vergleichbare Bauteile mit den gleichen Bezugszeichen wie in Fig. 1 gekennzeichnet und nicht nochmals erläutert werden.

Im zweiten Ausführungsbeispiel enthält die Fördereinrichtung 1 statt einer einzigen, ringförmigen Auffangfläche 5 eine Vielzahl voneinander getrennter und im Wesentlichen horizontal miteinander fluchtender Auffang-Flächenbereiche 5', die sich über den Abstand A erstrecken. Die einzelnen Flächenbereiche 5' sind eben, bevorzugt ohne Aufbauten, in Draufsicht im Wesentlichen sägezahnförmig und bevorzugt durch eine am Umfang gezackte bzw. mit radialen Auslegern versehene Scheibe 8 gebildet. Die Sägezahnform weist eine bevorzugt spiralig zur Drehachse 4' verlaufende oder von innen nach außen nach hinten, d. h. entgegen der Drehrichtung D, gekrümmte oder gerundete vorlaufende Kante 8a auf, die aus der Nähe des Drehkreises DK bis zur Wandung 2a des Behälters 2 reicht. Diese Kante 8a wirkt als Mitnehmer für das Fördergut und schiebt dieses in Richtung auf den geradlinig verlaufenden Abstreifer 7.

Wie Fig. 2B zeigt, ist auch die Scheibe 8 parallel zur Bodenebene und oberhalb dieser Bodenebene B angeordnet.

Den Auffangflächen 5' ist auch hier wiederum ein Abstreifer 7 zugeordnet, der hier mit einem Schlitz 9 ausgestattet ist, durch den sich die Scheibe 8 drehen kann. Dabei hat der Schlitz 9 bevorzugt die doppelte Höhe eines Abstreifabstandes a plus der Materialdicke der Scheibe 8, so dass kein Fördergut in den Schlitz 9 eingetragen werden kann. Darüber hinaus reicht der Abstreifer 7 bis zum Boden 3, so dass auch das zwischen den einzelnen Auffangflächen 5' auf den Boden 3 herabgefallene Material wieder in den Förderkreislauf gelangt, wenn es von der als Mitnehmer 8a wirkenden, vorlaufenden Kante erfasst wird.

Die Leitfläche 7a des Abstreifers 7 ist hier für eine nach außen weisende Transportrichtung T ausgebildet, d.h. das radial außenliegende Ende der Leitfläche 7a ist in Drehrichtung D vorlaufend angeordnet. Der Winkel α zwischen der Leitfläche 7a und der vorlaufenden Kante 8a sollte so bemessen werden, dass zwischen beiden kein Fördergut eingeklemmt werden kann, d.h. der Winkel α sollte bevorzugt mehr als 90°, bevorzugt etwa 120°, betragen. Die Höhe der Leitfläche 7a in Richtung der Drehachse 4' ist hier geringer als beim ersten Ausführungsbeispiel und beträgt nur etwa die Materialdicke der Wendel der Mischschnecke 4 oder die Höhe einer waagerechten Scheibe oder eines Sockels 4b unterhalb der Mischschnecke 4, auf der diese aufliegt.

Die Fig. 2D bis 2F zeigen eine Abwandlung des Ausführungsbeispiels der Fig. 2A bis 2C. Gleiche oder vergleichbare Bauteile entsprechen den Bauteilen dieser Figuren. Die Abwandlung unterscheidet sich von den Fig. 2A bis 2C zum einen durch eine abgewandelte Form der Ausleger der Auffangflächen 5' der Scheibe 8, wobei hier die Auffangflächen im Wesentlichen als gleichseitiges Dreieck ausgebildet sind und die Scheibe 8 etwa Sternform aufweist. Die vorlaufende Kante 8a der einzelnen Auffangflächen 5' ist gerade und im Wesentlichen tangential zur Drehachse 4' angeordnet. Es sind, ebenso wie in den Fig. 2A bis 2C, sechs Auffangflächen 5' vorgesehen, die mit gleichen Abständen um die Drehachse 4' herum verteilt sind, wobei die Spitzen der Dreieckform zur Wandung 2 weisen.

Die zweite Abwandlung betrifft die Form und die Anordnung des Abstreifers 7. Der Abstreifer 7 reicht, wie insbesondere in den Fig. 2F und 2D zu sehen, bis zur Drehachse bzw. Drehwelle der Mischschnecke 4 und stützt sich auf dieser ab. Der Abstreifer 7 weist weiterhin die beiden einen Spalt 9 bildenden Abstreiferplatten auf, wobei sich die Scheibe 8 mit den Auflageflächen 5' durch den Schlitz 9 bewegt.

Die beiden Platten des Abstreifers 7 greifen unter einen Sockel 4b der Mischschnecke 4, wobei der Sockel 4b im Wesentlichen als kreisförmige Scheibe ausgebildet ist und im Wesentlichen dem Drehkreis DK entspricht bzw. einen etwas größeren Durchmesser als dieser aufweist, so dass der Sockel 4b, wie insbesondere in den Fig. 2D und 2F gezeigt, unter der Mischschnecke 4 vorragt. Der Abstreifer 7 hat eine etwa sensenartige Form, wobei die gegen die Drehrichtung D gewandte Leitfläche 7a nach außen gekrümmt ist. Durch die Sensenform wird der Abstreifer 7 gegen eine Drehwelle der Mischschnecke 4 gedrückt, so dass er sich gegen die Förderkräfte abstützen kann. In dieser Abwandlung wird somit eine gerade, vorlaufende Kante 8a mit einer gekrümmten Leitfläche 7a kombiniert.

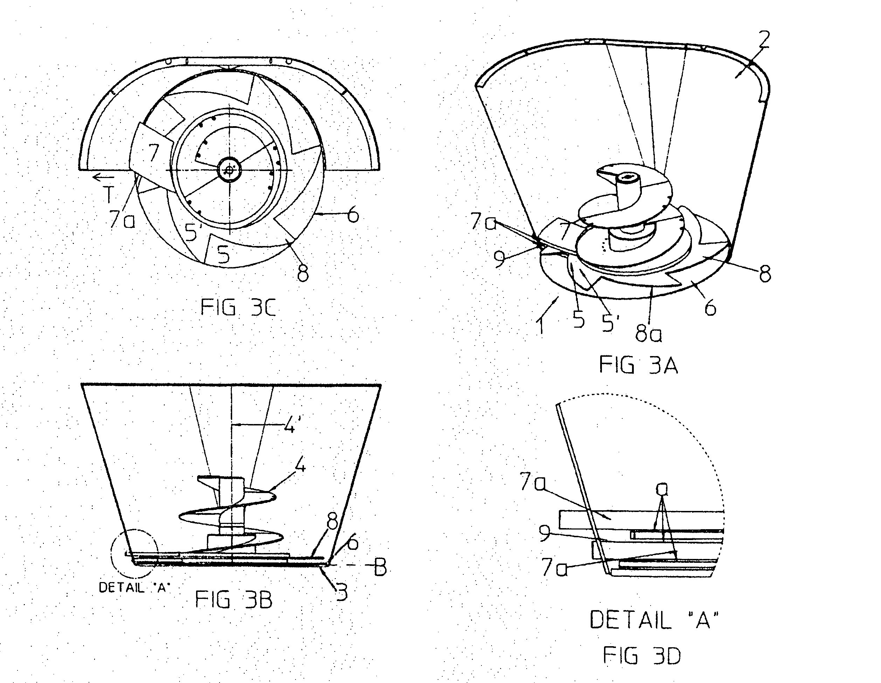

Die Fig. 3A bis 3D zeigen ein drittes Ausführungsbeispiel einer erfindungsgemäßen Fördereinrichtung 1, wobei gleiche bzw. vergleichbare Bauteile mit den gleichen Bezugszeichen gekennzeichnet und nicht nochmals erläutert werden.

Im dritten Ausführungsbeispiel sind die Scheiben 6 und 8 in einer einzigen Fördereinrichtung 1 kombiniert. Dabei läuft die Scheibe 6 mit der Auffangfläche 5 oberhalb des Bodens 3 und die Scheibe 8 mit den Auffangflächen 5' im Abstand oberhalb der Auffangfläche 5, aber immer noch unterhalb der Mischschnecke 4. Alle drei Bauteile, d.h. die Mischschnecke 4 und die beiden Scheiben 6 und 8 werden unabhängig voneinander oder gemeinsam (bezüglich Drehrichtung und Geschwindigkeit) um die Drehachse 4' der Mischschnecke 4 angetrieben, wobei auch eine der Scheiben angehalten werden kann. Der Abstand zwischen den beiden Scheiben 6 und 8 ist so bemessen, dass das zwischen benachbarten Auffangflächenbereichen 5' auf die Auffangflächen 5 hindurchfallende Fördergut zwischen den beiden Scheiben nicht eingeklemmt wird, sondern ebenfalls zum Abstreifer 7 verbracht wird. Als Abstreifer 7 wird der Abstreifer mit dem Spalt 9 gemäß dem zweiten Ausführungsbeispiel eingesetzt, der oberhalb der Scheibe 6 angeordnet ist und auch mit der Scheibe 6 den Abstreifabstand aufweist. Der Abstreifer 7 ist auch hier ortsfest bezüglich der Scheiben 6, 8 und der Schnecke 4. Seine Leitfläche 7a sowohl in Bezug auf die Scheibe 6 als auch in Bezug auf die Scheibe 8 ist hier für eine nach außen gerichtete Transportrichtung T ausgelegt (vgl. zweites Ausführungsbeispiel). Beim dritten Ausführungsbeispiel staut sich das auf der unteren, geschlossenen Scheibe 6 liegende Fördergut vor der Leitfläche 7a und wird nach außen gestaut und in die gewünschte Richtung weggeschoben oder steigt ggf. auch über den Abstreifer 7 an.

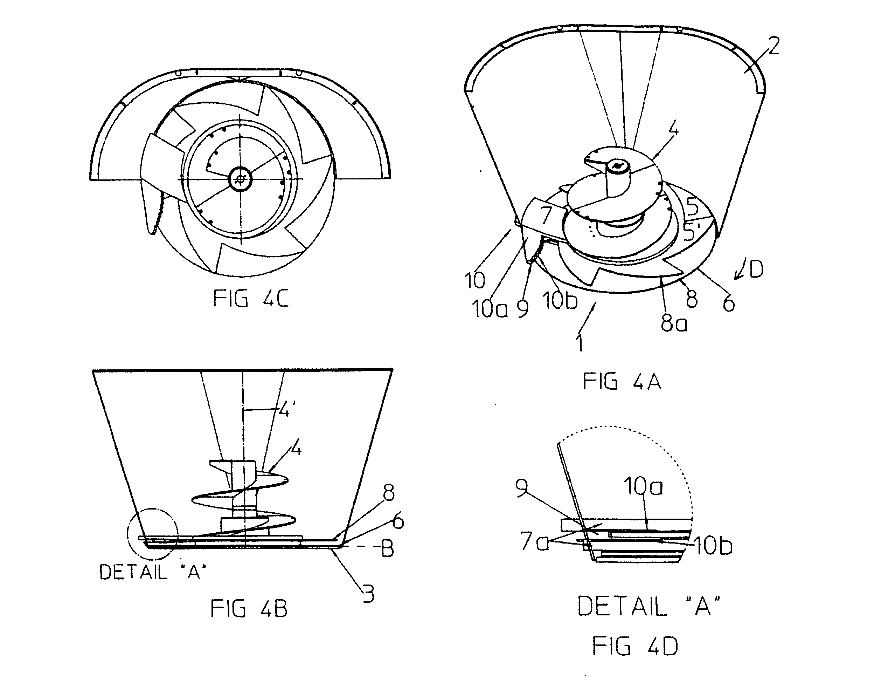

Die Figuren 4A bis 4D zeigen ein viertes Ausführungsbeispiel einer erfindungsgemäßen Fördereinrichtung, wobei gleiche bzw. vergleichbare Bauteile mit den gleichen Bezugszeichen gekennzeichnet und nicht nochmals erläutert sind.

Das vierte Ausführungsbeispiel unterscheidet sich vom dritten Ausführungsbeispiel lediglich durch die Anordnung einer Schneideinrichtung 10, die hier dem Abstreifer 7 zugeordnet ist. Die Schneideinrichtung 10 weist eine oder zwei Messerkanten 10a und 10b auf, die ein- oder beidseitig des Schlitzes 9 angeordnet sind und diesen entgegen der Drehrichtung D verlängert. Die Messerkanten 10a, 10b verlaufen dabei etwa von der radialen Mitte jeder Leitfläche 7a in einem leichten Bogen bis zur Wandung des Behälters 2 nach außen. Dadurch wird das Fördergut beim Drehen in Drehrichtung D sowohl auf der unteren Scheibe 6 als auch auf der oberen Scheibe 8 jeweils gegen die gezackte Messerkante gedrückt, so dass das Fördergut geschnitten werden kann. Bevorzugt ist/sind die Messerkante(n) schwenkbar bzw. ausweichend angeordnet und federbelastet.

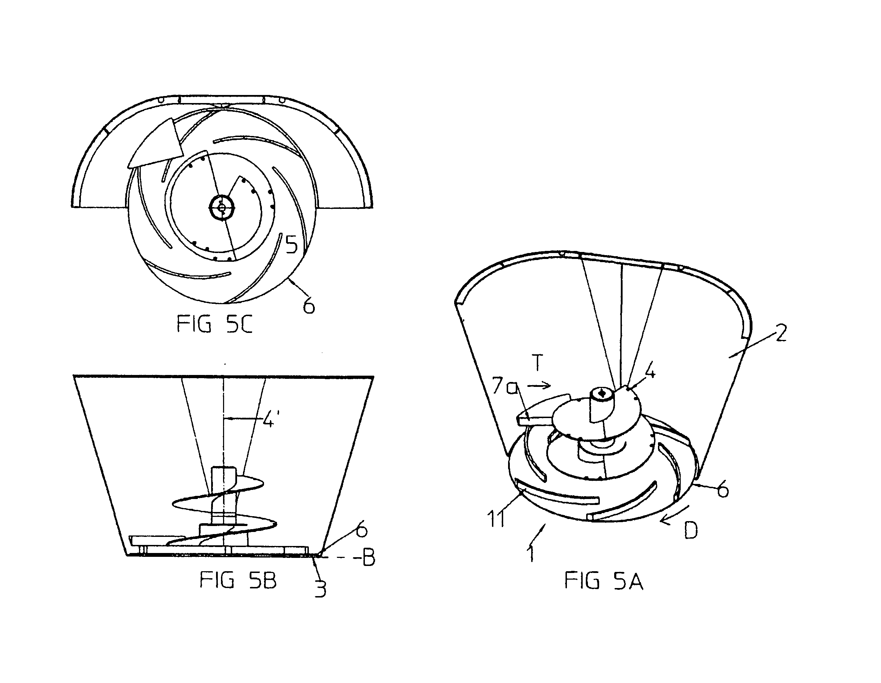

Die Fig. 5A bis 5C zeigen ein weiteres Ausführungsbeispiel einer erfindungsgemäßen Fördereinrichtung 1, wobei gleiche bzw. vergleichbare Bauteile mit den gleichen Bezugszeichen gekennzeichnet und nicht nochmals näher erläutert sind.

Das fünfte Ausführungsbeispiel basiert auf dem ersten Ausführungsbeispiel gemäß den Fig. 1A bis 1C und enthält die Scheibe 6 mit der Auffangfläche 5, die im Abstand oberhalb eines eine Bodenebene B definierenden Bodens 3 angeordnet ist. Das fünfte Ausführungsbeispiel unterscheidet sich von den zweiten bis vierten Ausführungsbeispielen durch die Tatsache, dass der Scheibe 6 Mitnehmer 11 zugeordnet sind. Die Mitnehmer 11 sind bevorzugt in Form von Mitnehmerstegen vorgesehen, die in Umfangsrichtung verteilt im Wesentlichen spiralig um die Drehachse 4' angeordnet sind.

Der gegenüber der Drehbewegung D ortsfeste Mitnehmer 7 ist mit seiner Leitfläche 7a für eine Transportrichtung T nach innen, d.h. in Richtung auf die Mischschnecke 4 ausgelegt, d.h. sein radial inneres Ende ist gegenüber der Drehrichtung D vorlaufend (analog zum ersten Ausführungsbeispiel).

Demgemäß sind auch die Mitnehmer 11 für eine Transportrichtung radial nach innen ausgelegt, d.h. ihre radial äußeren Enden sind in Drehrichtung vorlaufend und weisen den größeren Abstand zur Drehachse 4' auf als ihre in Drehrichtung D nachlaufenden Enden.

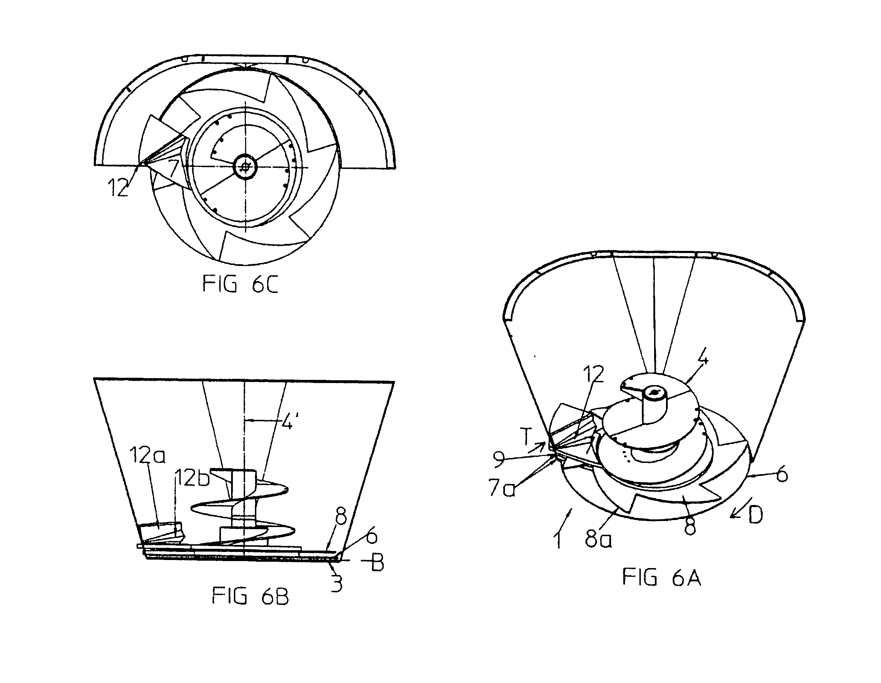

Fig. 6A bis 6C zeigen ein sechstes Ausführungsbeispiel einer erfindungsgemäßen Fördereinrichtung 1, wobei gleiche bzw. vergleichbare Bauteile mit den gleichen Bezugszeichen wie in den vorangegangenen Ausführungsbeispielen bezeichnet und nicht nochmals erläutert werden.

Das sechste Ausführungsbeispiel basiert auf dem dritten Ausführungsbeispiel und enthält die Scheiben 6 und 8 sowie die Mischschnecke 4, die um eine gemeinsame Drehachse 4' gemeinsam oder unabhängig voneinander in Drehrichtung D rotierend angetrieben werden. Dem Abstreifer 7 mit den beiden über den Spalt 9 getrennten Leitflächen 7a ist eine Leiteinrichtung 12 zugeordnet, die die an sich durch die Leitflächen 7a induzierter Transportrichtung T nach innen umkehrt. Zu diesem Zweck hat die Leiteinrichtung 12 eine aufrecht stehende und gegen die Drehrichtung D weisende Prallwand 12a mit einem nach außen abfallend angeordneten Leitkörper 12b. Der Leitkörper 12b ist hier in Form eines pyramidenförmigen Prismas mit zwei zu einer außenliegenden Spitze zusammenlaufenden Prallflächen ausgebildet. Auf diese Weise wird das durch die Leitflächen 7a und die Mitnehmer 8a gegen die geschlossene Prallwand gedrückte Fördergut, das dadurch an der Wand hochsteigt, in seiner Richtung umgelenkt und in der gewünschten Transportrichtung T zur Mischschnecke 4 hin gefördert.

In den vorangegangenen Ausführungsbeispielen wurde die Fördereinrichtung nur im Zusammenhang mit einem Mischbehälter mit einer einzigen Mischschnecke dargestellt. Die Erfindung ist jedoch nicht auf dieses Anwendungsbeispiel beschränkt.

So zeigen die Fig. 7A bis 7C die Anwendung des ersten Ausführungsbeispiels in einem Mischbehälter mit zwei Mischschnecken 4, hier als Mischschnecken 4.1 und 4.2 dargestellt, die in einem Übergabebereich Ü miteinander zum Austausch von Fördergut verbunden sind. Beide Mischschnecken sind mit jeweils einer der Scheiben 6 und jeweils einem Abstreifer 7, dargestellt jeweils als Scheibe 6.1, 6.2 und Abstreifer 7.1, 7.2. Dabei ist einer der Abstreifer 7.1 an der Wandung 2a des Behälters 2 und in Drehrichtung D hinter einer dort vorgesehenen Öffnung 2b und der andere Abstreifer 7.2 an einem im Zwickel zwischen den beiden Mischschnecken 4.1, 4.2 angeordneten Verteilerkegel 13 und in Drehrichtung D hinter einem Übergabebereich Ü zwischen den Schnecken 4.2 4.1 angeordnet. Beide Abstreifer 7.1, 7.2 sind aus der in Fig. 7C gestrichelt in die in Fig. 7C durchgezogen dargestellte Stellung verschwenkbar. Durch Ausschwenken des Abstreifers 7 kann eine bessere Füllung der Schnecke erreicht werden. Durch Einschwenken der Abstreifer wird ein besseres Ausdosieren durch die nur angedeutete Dosieröffnung 2b bezüglich der Mischschnecke 4.1 bzw. ein besseres Übergabeverhalten von der Mischschnecke 4.2 auf die Mischschnecke 4.1 erreicht.

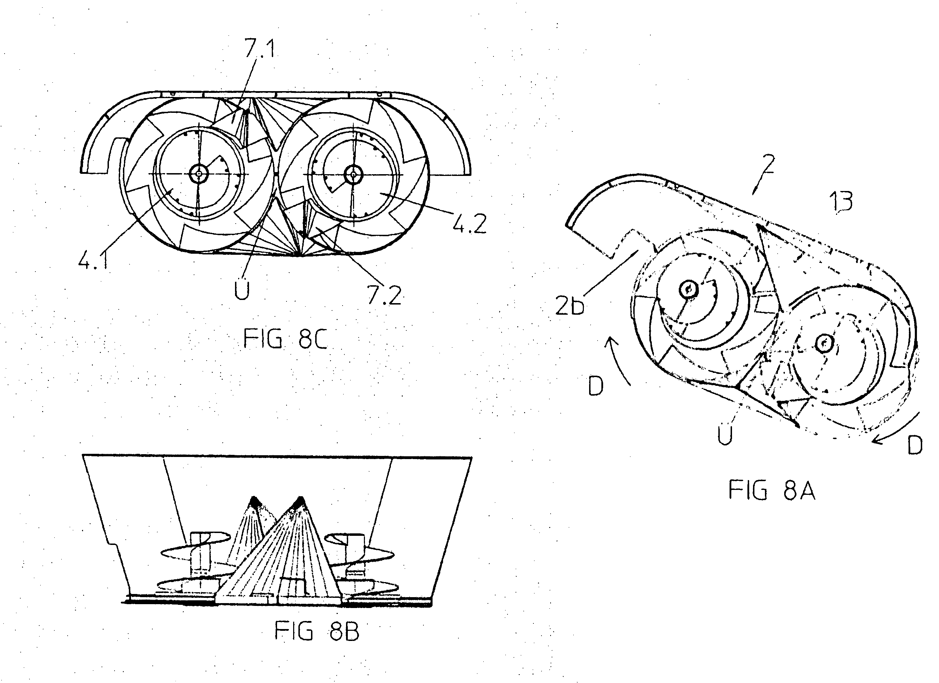

Die Fig. 8A bis 8C beschreiben eine Anwendung des Ausführungsbeispieles gemäß Fig. 6 in der Art gemäß Fig. 7, wobei zwei der Fördereinrichtungen gemäß den Fig. 6 in einem gemeinsamen Behälter 2 untergebracht sind und die mit der Leiteinrichtung 12 versehenen Abstreifer 7.1 und 7.2 in gleicher Weise schwenkbar wie gemäß den Fig. 7A und 7B befestigt sind. Dabei sind die zugeordneten Abstreifer 7.2, 7.2 spiegelbildlich zueinander und jeweils in Drehrichtung D der zugeordneten Mischschnecke 4 vor einem Übergabebereich Ü zwischen den Mischschnecken 4.1 und 4.2 angeordnet.

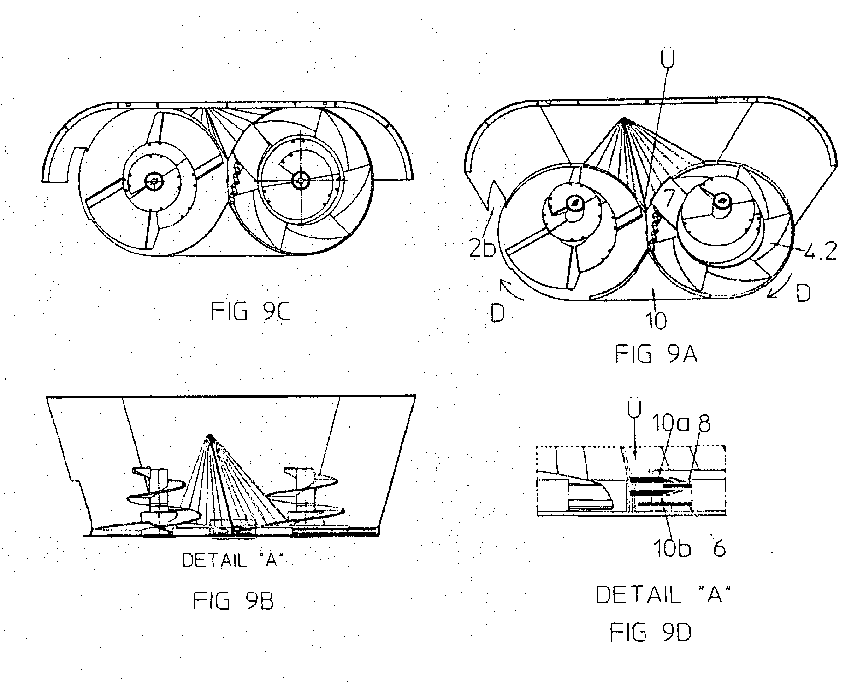

Die Fig. 9A bis 9D zeigen ein Anwendungsbeispiel der Fördereinrichtung gemäß den Fig. 4A bis 4C, bei dem dem Abstreifer 7 eine Schneideinrichtung 10 zugeordnet ist. Der Abstreifer 7 ist der Mischschnecke 4.2 zugeordnet und in Drehrichtung D hinter dem Übergabebereich Ü zwischen den beiden Mischschnecken 4.1 und 4.2 angeordnet; d. h. am Ende des Übergabebereichs Ü. Dabei bilden die nach oben weisenden Oberflächen der Messerkante 10a, wie Fig. 9D zeigt, eine glatte und geschlossene Übergangsfläche im Übergabebereich Ü, die den Übergang des Fördergutes nicht behindert.

In gleicher Weise kann auch die untere Messerkante 10b angeordnet sein. Das Fördergut wird in diesem Ausführungsbeispiel entlang und durch die Messerkanten 10a, 10b geschoben, so dass es von der einen in die andere Mischkammer (2-Weg) gelangt.

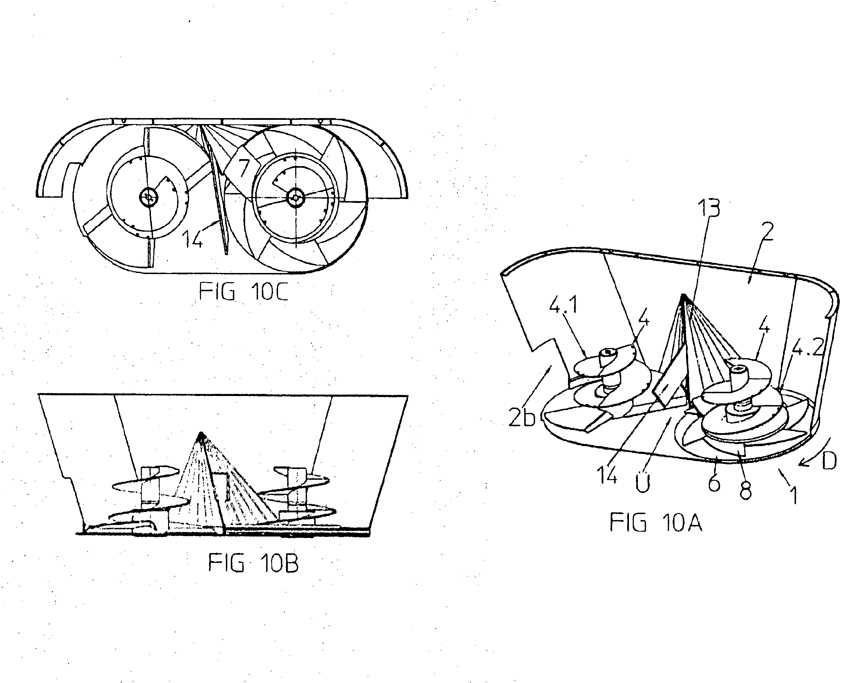

Die Fig. 10A bis 10C zeigen ein Anwendungsbeispiel, bei dem in einem gemeinsamen Behälter 2 einer Futtermischeinrichtung wiederum zwei oder mehrere Mischschnecken 4 angeordnet sind, von denen nicht alle, im dargestellten Ausführungsbeispiel mit zwei Mischschnecken 4 nur eine, mit der erfindungsgemäßen Fördereinrichtung 1 versehen sind. Im dargestellten Ausführungsbeispiel ist dies die Mischschnecke 4.2, die entfernt von der Austragsöffnung 2b angeordnet ist. In diesem Ausführungsbeispiel enthält die zweite Mischschnecke 4.2 die Fördereinrichtung nach Fig. 3 mit der geschlossenen Scheibe 6 und der mit Auslegern versehenen Scheibe 8 sowie dem zweigeteilten Abstreifer 7 mit Spalt 9, der in Drehrichtung D nach dem Übergabebereich Ü zwischen den beiden Schnecken 4.1 und 4.2 angeordnet ist.

In diesem Ausführungsbeispiel ist am Verteilkegel 13 zwischen den beiden Mischschnecken 4.1, 4.2 ein Schott 14 vorgesehen, das den Durchgang im Übergangsbereich Ü nach oben hin begrenzt. Diese Ausgestaltung eignet sich besonders dort, wo der Mischer nicht waagerecht benutzt wird. Durch das Schott 14 wird das Fördergut im Übergabebereich Ü angestaut, wodurch die Schwerkraftförderung bei Schrägstellung gebremst wird und sich ein besserer Kreislauf mit Zwangsübergabe zwischen den Mischschnecken ergibt.

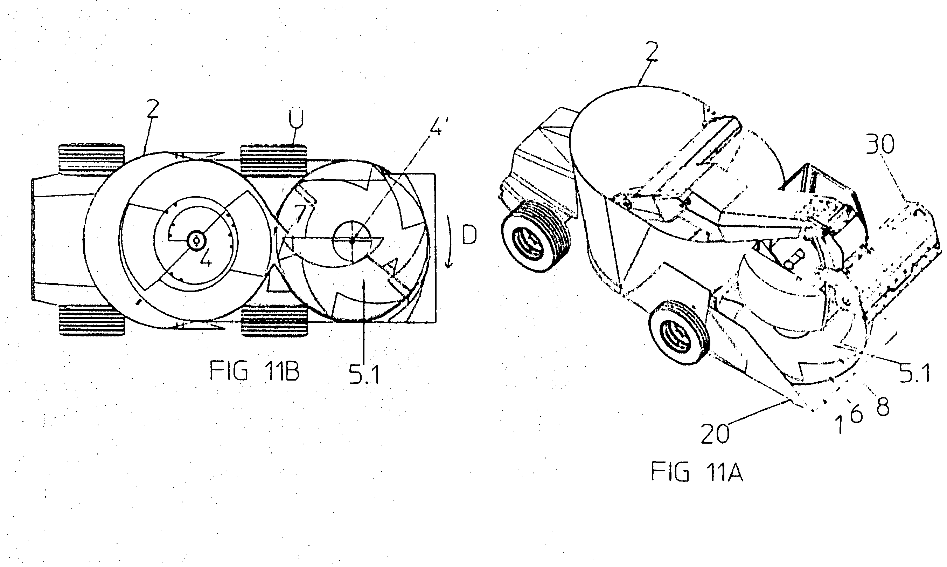

Die Fig. 11A und 11B zeigen ein weiteres Anwendungsbeispiel der Erfindung in einem selbstfahrenden Futterwagen. In diesem Ausführungsbeispiel ist die erfindungsgemäße Fördereinrichtung als Förderrotor ausgebildet und im Aufnahmebereich zum Beladen eines Behälters 2 mit oder ohne Mischschnecke 4 angeordnet. Der Förderrotor entspricht dem dritten Ausführungsbeispiel der Erfindung, d.h. er enthält die geschlossene Scheibe 6 und die mit Auslegern versehene Scheibe 8, die um eine gemeinsame Drehachse 4' gemeinsam oder unabhängig voneinander (Drehrichtung, Geschwindigkeit, An- und Ausschaltung) angetrieben sind. Der Rotor enthält jedoch keine Mischschnecke. Der zugeordnete Abstreifer 7 ist am Übergabebereich Ü in den Behälter 2 hinein angeordnet und befindet sich in Drehrichtung D nach dem Übergabebereich Ü.

Im Anschluss an den Übergabebereich Ü kann eine weitere erfindungsgemäße Fördereinrichtung 1 oder eine Mischschnecke vorgesehen sein, die, wie dargestellt, nicht mit der erfindungsgemäßen Fördereinrichtung 1 versehen ist, jedoch auch mit dieser versehen sein kann. Auch können sich andere Mischeinrichtungen, wie horizontale Mischer, vertikale Mischer mit einer oder mehreren Schnecken oder (andere) Fördereinrichtungen anschließen.

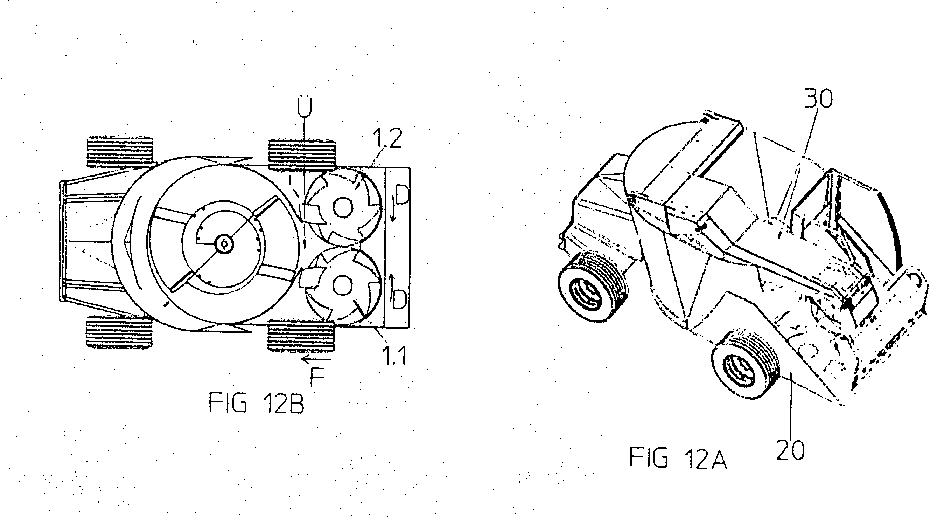

Das Anwendungsbeispiel nach den Fig. 12A und 12B entspricht dem Anwendungsbeispiel nach den Fig. 11A und 11B, lediglich mit dem Unterschied, dass statt einem Förderrotor zwei als Förderrotor ausgebildete Fördereinrichtungen 1.1 und 1.2 im Beladebereich vorgesehen sind. Die beiden Förderrotoren 1.1 und 1.2 sind im dargestellten Ausführungsbeispiel quer und symmetrisch zur Förderrichtung F nebeneinander angeordnet und spiegelbildlich rotierend angetrieben. Dabei wird die Drehrichtung D so gewählt, dass die beiden Förderrotoren 1.1 und 1.2 am in Förderrichtung F hinteren Ende zusammenlaufen. Die Abstreifer 7 beider Förderrotoren sind jeweils an einer Seite des Übergabebereiches Ü vorgesehen. Die Förderrotoren 1.1 und 1.2 sind ansonsten gemäß dem Ausführungsbeispiel nach Fig. 3 ausgebildet. Die Förderrotoren 1.1 und 1.2 können jedoch auch in Fahrtrichtung schräg versetzt zueinander angeordnet werden, was einen größeren Durchmesser der Rotoren gestattet, ohne dass sie über die seitliche Breite hinausragen.

Bei den Anwendungsbeispielen der Fig. 11 und 12 können die Rotoren in einem absenkbaren Bereich 20 des Behälters 2 untergebracht werden, der zur leichteren Beladung auf den Boden geschwenkt werden kann und damit eine schräge Laderampe bildet, auf die das Fördergut mit herkömmlichen Beladeeinrichtungen, wie das dargestellte Ladeschild 30, gezogen werden kann.

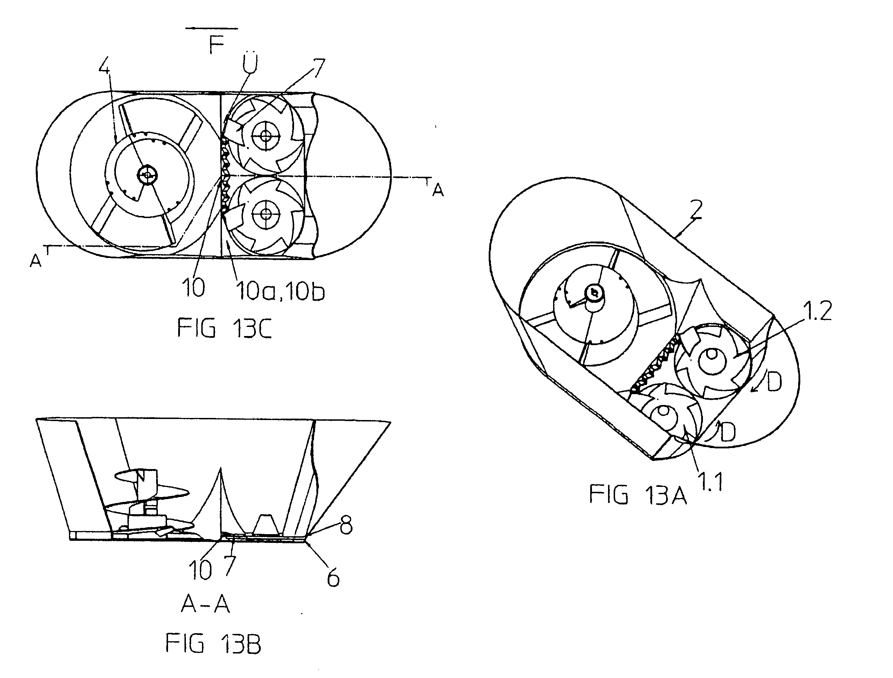

Die Fig. 13A bis 13C zeigen ein siebentes Anwendungsbeispiel der erfindungsgemäßen Fördereinrichtung. Dieses Anwendungsbeispiel zeigt eine Konstruktion ähnlich Fig. 12, angepasst an einen geschlossenen Behälter 2. In diesem Ausführungsbeispiel ist eine der Förderschnecken durch zwei Förderrotoren 1.1 und 1.2 ersetzt, die gemäß dem vierten Ausführungsbeispiel nach den Fig. 4A bis 4C ausgebildet, aber spiegelbildlich zueinander angeordnet sind. Dadurch bilden die Messerkanten 10a, 10b der Schneideinrichtung 10 eine über den Übergangsbereich Ü durchgehende Schneidstrecke. Jenseits des Übergangsbereiches befindet sich eine herkömmliche Mischschnecke 4, die mit einer Fördereinrichtung 1 versehen sein kann, im dargestellten Anwendungsbeispiel jedoch ohne Fördereinrichtung ist.

Durch den Ersatz einer der Mischschnecken durch die beiden kleinen Förderrotoren kann der Energieeinsatz verringert werden, da die beiden kleinen Rotoren weniger Energie als eine normal große Mischschnecke benötigen. Durch den Ersatz der Mischschnecke durch die Rotoren kann somit viel Volumen mit wenig Leistung gehandhabt werden. Durch die Schneidvorrichtung können große Ballen schnell aufgelöst und geschnitten werden. Das gibt bei kleinen Mischern mit lediglich zwei Mischschnecken oft Probleme. Der Ballen bleibt oben in den Mischkammern, wird an die Wand gedrückt und ist durch die Schnecke nicht mehr zu erreichen. Im dargestellten Anwendungsbeispiel fällt der Ballen sofort bzw. früher oder später in den Bereich oberhalb der Rotoren, wo er sicher aufgelöst werden kann.

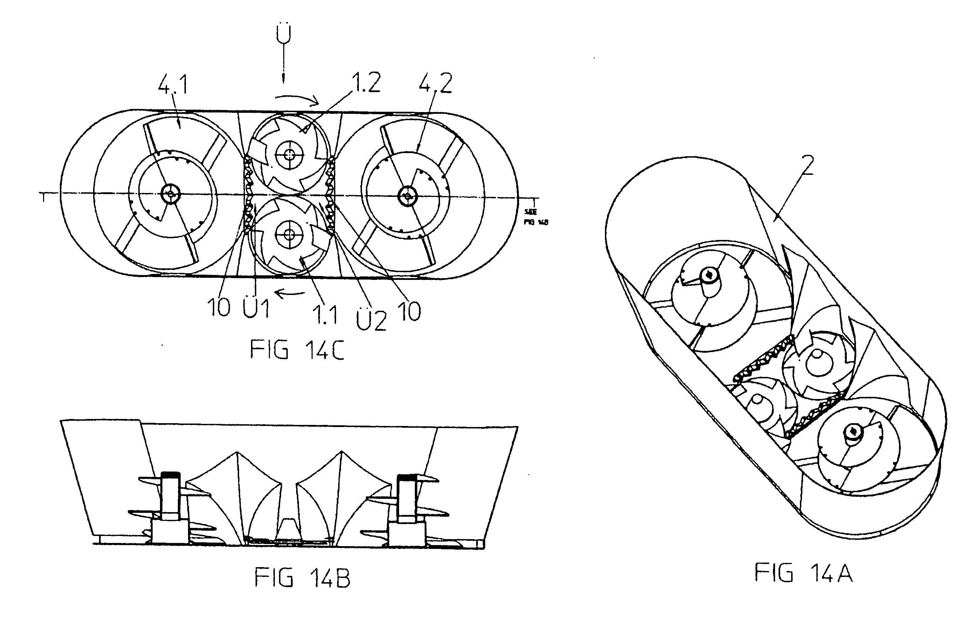

Das Anwendungsbeispiel gemäß den Fig. 14A bis 14C ist ähnlich wie das Anwendungsbeispiel der Fig. 13, nur mit dem Unterschied, dass hier zwei Mischschnecken 4.1, 4.2, mit oder ohne erfindungsgemäßer Fördereinrichtung, vorgesehen sind, die über zwei Förderrotoren 1.1 und 1.2 miteinander verbunden sind, die im Übergabebereich Ü zwischen den beiden Schnecken angeordnet sind. Dabei weisen die Förderrotoren 1.1 und 1.2 jeweils einen Übergabebereich Ü1 zur ersten Schnecke 4.1 und Ü2 zur zweiten Mischschnecke 4.2 auf. Die Abstreifer 7 der beiden Rotoren sind jeweils so angeordnet, dass sich die zugeordnete Schneideinrichtung 10 jeweils über den gesamten zugeordneten Übergabebereich Ü1 bzw. Ü2 erstreckt. Die Förderrotoren 1.1 und 1.2 werden gleichsinnig angetrieben.

In Abwandlung der beschriebenen Ausführungs- und Anwendungsbeispiele können die anhand der Figuren beschriebenen Einzelheiten ohne weiteres untereinander ausgetauscht werden. Die erfindungsgemäße Fördervorrichtung kann überall dort eingesetzt werden, wo Fördergüter mit ähnlichen Eigenschaften wie Futter gefördert werden soll.

## Patentansprüche

1. Fördervorrichtung (1), insbesondere für eine Futter-Mischeinrichtung, mit einem Behälter (2) mit Bodenebene (B) und mit einer im Wesentlichen parallel zur Bodenebene (B) verlaufenden Auffangfläche (5, 5'), die in einer Drehrichtung (D) um eine im Wesentlichen senkrecht zur Bodenebene (B) verlaufende Drehachse (4') rotierend angetrieben ist, **dadurch gekennzeichnet, dass** der Auffangfläche (5, 5') ein beim Fördern feststehender Abstreifer (7) zugeordnet ist, der in einem Abstreifabstand (a) oberhalb der Auffangfläche (5, 5') angeordnet ist und diese vom Umfang der Auffangfläche (5, 5') in Richtung auf die Drehachse (4') übergreift.

2. Fördervorrichtung nach Anspruch 1, **dadurch gekennzeichnet, dass** der Abstreifer (7) eine schräg zur Radialen verlaufende Leitfläche (7a) aufweist.

3. Fördervorrichtung nach Anspruch 1 oder 2, **dadurch gekennzeichnet, dass** die Leitfläche (7a) des Abstreifers (7), für eine Transportrichtung (T) von der Drehachse (4') weg, an ihrem radial außenliegenden Ende bezüglich der Drehrichtung (D) vorläuft.

4. Fördervorrichtung nach einem der Ansprüche 1 bis 3, **dadurch gekennzeichnet, dass** die Leitfläche (7a) des Abstreifers (7), für eine Transportrichtung (T) auf die Drehachse (4') zu, an ihrem radial außenliegenden Ende bezüglich der Drehrichtung (D) nachläuft.

5. Fördervorrichtung nach einem der Ansprüche 1 bis 4, **dadurch gekennzeichnet, dass** der Abstreifer (7) einstellbar ist.

6. Fördervorrichtung nach einem der Ansprüche 1 bis 5, **dadurch gekennzeichnet, dass** der Abstreifer (7) in eine unwirksame Stellung bewegbar ist.

7. Fördervorrichtung nach einem der Ansprüche 1 bis 6, **dadurch gekennzeichnet, dass** dem Abstreifer (7) eine Schneideinrichtung (10) zugeordnet ist.

8. Fördervorrichtung nach Anspruch 7, **dadurch gekennzeichnet, dass** die Schneideinrichtung (10) als Messerkante (10a, 10b) ausgebildet ist.

9. Fördervorrichtung nach Anspruch 8, **dadurch gekennzeichnet, dass** die Messerkante (10a, 10b) federbelastet ist.

10. Fördervorrichtung nach einem der Ansprüche 1 bis 9, **dadurch gekennzeichnet, dass** der Abstreifer (7) mit einer Leiteinrichtung (12) versehen ist.

11. Fördervorrichtung nach einem der Ansprüche 1 bis 10, **dadurch gekennzeichnet, dass** die Auffangfläche (5) auf einer geschlossenen Scheibe (6) ausgebildet ist.

12. Fördervorrichtung nach einem der Ansprüche 1 bis 11, **dadurch gekennzeichnet, dass** oberhalb der Auffangfläche (5) Mitnehmer (8a) nach oben vorstehen, die um die Drehachse (4') drehend angetrieben sind.

13. Fördervorrichtung nach Anspruch 12, **dadurch gekennzeichnet, dass** die Mitnehmer (8a) als Mitnehmerkanten von Auslegern am Umfang einer Scheibe (8) ausgebildet sind, die oberhalb einer Auffangfläche (5) antreibbar angeordnet ist.

14. Fördervorrichtung nach Anspruch 12, **dadurch gekennzeichnet, dass** die Mitnehmer als von der Auffangfläche (5) nach oben vorstehende Leitstege (11) ausgebildet sind.

15. Fördervorrichtung nach einem der Ansprüche 1 bis 13, **dadurch gekennzeichnet, dass** die Auffangfläche (5') auf einer Vielzahl von Auslegern ausgebildet ist.

16. Fördervorrichtung nach Anspruch 15, **dadurch gekennzeichnet, dass** die Ausleger in Draufsicht jeweils eine sägezahnähnliche Form aufweisen, deren Kante (8a) als Mitnehmer ausgebildet ist.

17. Fördervorrichtung nach einem der Ansprüche 1 bis 16, **dadurch gekennzeichnet, dass** die Auffangfläche (5, 5') unterhalb einer Mischschnecke (4) radial vorsteht und um die Drehachse (4') der Mischschnecke (4) drehbar ist.

18. Fördervorrichtung nach Anspruch 17, **dadurch gekennzeichnet, dass** der Abstreifer (7) über einen Abstand (A) vom Umfang der Auffangfläche (5, 5') im Wesentlichen bis zu einem auf die Auffangfläche (5, 5') projizierbaren Drehkreis (DK) der Mischschnecke (4) reicht.

19. Fördervorrichtung nach Anspruch 18, **dadurch gekennzeichnet, dass** der Abstreifer (7) bis unter die Mischschnecke (4) reicht.

20. Fördervorrichtung nach einem der Ansprüche 1 bis 16, **gekennzeichnet, durch** seine Ausgestaltung als Förderrotor.

21. Futtermischeinrichtung mit einer Mehrzahl von Mischschnecken, **dadurch gekennzeichnet, dass** nur ein Teil der vorhandenen Mischschnecken (4) mit einer Fördervorrichtung nach einem der Ansprüche 1 bis 19, versehen ist.

22. Mischwagen, insbesondere selbstfahrend, mit einer als Transportmittel von einer Entnahmestelle zur Mischschnecke eingesetzten Fördervorrichtung nach einem der Ansprüche 1 bis 20.

## Claims

1. Conveyor device (1), in particular for a feed mixer, comprising a container (2) with a bottom plane (B) and with a collection surface (5, 5') extending essentially parallel to said bottom plane (B) and being rotationally driven in a direction of rotation (D) about an axis of rotation (4') which is essentially perpendicular to said bottom plane (B), **characterized in that** said collection surface (5, 5') is assigned a scraper (7) being fixed during conveyance which is arranged at a scraping distance (a) above said collection surface (5, 5 ') and reaches across the latter from the circumference of said collection surface (5, 5') in the direction of said axis of rotation (4').

2. Conveyor device according to claim 1, **characterized in that** said scraper (7) comprises a guide surface (7a) extending at an inclination to the radial plane.

3. Conveyor device according to claim 1 or 2, **characterized in that** said guide surface (7a) of said scraper (7), for a transport direction (T) away from said axis of rotation (4'), is leading at its radially outer end with respect to the direction of rotation (D).

4. Conveyor device according to one of claims 1 to 3, **characterized in that** said guide surface (7a) of said scraper (7), for a transport direction (T) towards said axis of rotation (4'), is trailing at its radially outer end with respect to the direction of rotation (D).

5. Conveyor device according to one of claims 1 to 4, **characterized in that** said scraper (7) is adjustable.

6. Conveyor device according to one of claims 1 to 5, **characterized in that** said scraper (7) can be moved into an inoperative position.

7. Conveyor device according to one of claims 1 to 6, **characterized in that** said scraper (7) is assigned a cutting device (10).

8. Conveyor device according to claim 7, **characterized in that** said cutting device (10) is formed as a knife edge (10a, 10b).

9. Conveyor device according to claim 8, **characterized in that** said knife edge (10a, 10b) is spring-loaded.

10. Conveyor device according to one of claims 1 to 9, **characterized in that** said scraper (7) is provided with a guide device (12).

11. Conveyor device according to one of claims 1 to 10, **characterized in that** said collection surface (5) is formed on a closed disk (6).

12. Conveyor device according to one of claims 1 to 11, **characterized in that** drives (8a) protrude upwardly above said collection surface (5), which are driven rotatably about said axis of rotation (4').

13. Conveyor device according to claim 12, **characterized in that** said drives (8a) are formed as drive edges of arms at the circumference of a disk (8) which is arranged driveably above a collection surface (5).

14. Conveyor device according to claim 12, **characterized in that** said drives are formed as guide webs (11) protruding upwardly from said collection surface (5).

15. Conveyor device according to one of claims 1 to 13, **characterized in that** said collection surface (5') is formed on a plurality of arms.

16. Conveyor device according to claim 15, **characterized in that** said arms when viewed in plan view each have a sawtooth-like shape, the edge (8a) of which is formed as a drive.

17. Conveyor device according to one of claims 1 to 16, **characterized in that** said collection area (5, 5') radially protrudes from below a mixing auger (4) and is rotatable about said axis of rotation (4') of said mixing auger (4).

18. Conveyor device according to claim 17, **characterized in that** said scraper (7) reaches across a distance (A) from the circumference of said collection surface (5, 5') essentially up to a turning circle (DK) of said mixing auger (4) projectable onto said collection surface (5, 5').

19. Conveyor device according to claim 18, **characterized in that** said scraper (7) reaches to under said mixing auger (4).

20. Conveyor device according to one of claims 1 to 16, **characterized by** its design a as a conveying rotor.

21. Feed mixer comprising a plurality of mixing augers, **characterized in that** only part of said existing mixing augers (4) are provided with a conveyor device according to one of claims 1 to 19.

22. Mixer wagon, in particular self-propelled, comprising a conveyor device used as a transport means from a discharge station to said mixing auger according to one of claims 1 to 20.

## Revendications

1. Dispositif d'acheminement (1), notamment pour un système mélangeur de fourrage, comprenant un réceptacle (2) avec un plan de fond (B) et avec une surface de collecte (5, 5'), qui s'étend sensiblement de manière parallèle au plan de fond (B) et est entraînée en rotation, dans un sens de rotation (D), autour d'un axe de rotation (4') s'étendant sensiblement de manière perpendiculaire au plan de fond (B), **caractérisé en ce qu'**à la surface de collecte (5, 5') est associé un racleur (7) en position fixe lors de l'acheminement, qui est agencé à une hauteur de raclage (a) au-dessus de la surface de collecte (5, 5'), et surmonte celle-ci à partir de la périphérie de la surface de collecte (5, 5') en direction de l'axe de rotation (4').

2. Dispositif d'acheminement selon la revendication 1, **caractérisé en ce que** le racleur (7) présente une surface directrice (7a) s'étendant de manière oblique par rapport à une direction radiale.

3. Dispositif d'acheminement selon la revendication 1 ou la revendication 2, **caractérisé en ce que** pour une direction de transport (T) s'éloignant de l'axe de rotation (4'), la surface directrice (7a) du racleur (7), à son extrémité radialement extérieure, se situe en avant en se référant au sens de rotation (D).

4. Dispositif d'acheminement selon l'une des revendications 1 à 3, **caractérisé en ce que** pour une direction de transport (T) allant vers l'axe de rotation (4'), la surface directrice (7a) du racleur (7), à son extrémité radialement extérieure, se situe en arrière en se référant au sens de rotation (D).

5. Dispositif d'acheminement selon l'une des revendications 1 à 4, **caractérisé en ce que** le racleur (7) est réglable.

6. Dispositif d'acheminement selon l'une des revendications 1 à 5, **caractérisé en ce que** le racleur (7) peut être déplacé dans une position non active.

7. Dispositif d'acheminement selon l'une des revendications 1 à 6, **caractérisé en ce qu'**un dispositif de coupe (10) est associé au racleur (7).

8. Dispositif d'acheminement selon la revendication 7, **caractérisé en ce que** le dispositif de coupe (10) est réalisé sous forme d'arête de couteau (10a, 10b).

9. Dispositif d'acheminement selon la revendication 8, **caractérisé en ce que** l'arête de couteau (10a, 10b) est chargée par ressort.

10. Dispositif d'acheminement selon l'une des revendications 1 à 9, **caractérisé en ce que** le racleur (7) est muni d'un dispositif directeur de guidage (12).

11. Dispositif d'acheminement selon l'une des revendications 1 à 10, **caractérisé en ce que** la surface de collecte (5) est formée sur un disque fermé (6).

12. Dispositif d'acheminement selon l'une des revendications 1 à 11, **caractérisé en ce que** des entraîneurs (8a) font saillie vers le haut au-dessus de la surface de collecte (5), et sont entraînés en rotation autour de l'axe de rotation (4').

13. Dispositif d'acheminement selon la revendication 12, **caractérisé en ce que** les entraîneurs (8a) sont réalisés en tant que bords d'entraîneur de bras à la périphérie d'un disque (8), qui est agencé, en pouvant être entraîné, au-dessus d'une surface de collecte (5).

14. Dispositif d'acheminement selon la revendication 12, **caractérisé en ce que** les entraîneurs sont réalisés en tant que nervures directrices (11) faisant saillie, vers le haut, de la surface de collecte (5).

15. Dispositif d'acheminement selon l'une des revendications 1 à 13, **caractérisé en ce que** la surface de collecte (5') est réalisée sur un grand nombre de bras.

16. Dispositif d'acheminement selon la revendication 15, **caractérisé en ce que** les bras, en vue de dessus, présentent une forme du type dent de scie dont le bord (8a) est réalisé en tant qu'entraîneur.

17. Dispositif d'acheminement selon l'une des revendications 1 à 16, **caractérisé en ce que** la surface de collecte (5, 5') dépasse radialement sous une vis sans fin de mélange (4), et peut tourner autour de l'axe de rotation (4') de la vis sans fin de mélange (4).

18. Dispositif d'acheminement selon la revendication 17, **caractérisé en ce que** le racleur (7) s'étend sur une distance (A) de la périphérie de la surface de collecte (5, 5') sensiblement jusqu'à un cercle de rotation (DK) correspondant à la projection de la vis sans fin de mélange (4) sur la surface de collecte (5, 5').

19. Dispositif d'acheminement selon la revendication 18, **caractérisé en ce que** le racleur (7) s'étend jusque sous la vis sans fin de mélange (4).

20. Dispositif d'acheminement selon l'une des revendications 1 à 16, **caractérisé par** sa configuration en tant que rotor d'acheminement.

21. Système mélangeur de fourrage comprenant une pluralité de vis sans fin de mélange, **caractérisé en ce que** seules certaines des vis sans fin de mélange (4) présentes sont équipées d'un dispositif d'acheminement selon l'une des revendications 1 à 19.

22. Chariot ou véhicule mélangeur, notamment automobile ou automoteur, comprenant un dispositif d'acheminement selon l'une des revendications 1 à 20, qui est utilisé en tant que moyen de transport d'un point de prélèvement vers la vis sans fin de mélange.
